# EUROPÄISCHE PATENTSCHRIFT

(11) **EP 0 999 959 B1**
(45) Veröffentlichungstag und Bekanntmachung des Hinweises auf die Patenterteilung: **17.04.2002**
(21) Anmeldenummer: 98945102.6
(22) Anmeldetag: 28.07.1998
(51) Int. Cl.: B60S 1/08

(54) **SCHEIBENWISCHVORRICHTUNG**
WINDSCREEN WIPER DEVICE
DISPOSITIF D'ESSUIE-GLACE

(30) Priorität: 29.07.1997 DE 19732520
(43) Veröffentlichungstag der Anmeldung: 17.05.2000
(73) Patentinhaber: Valeo Auto-Electric Wischer und Motoren GmbH, 74321 Bietigheim-Bissingen (DE)
(72) Erfinder: HÖGLER, Eberhard, D-74391 Erligheim (DE)
(74) Vertreter: Dreiss, Fuhlendorf, Steimle & Becker
(86) Internationale Anmeldenummer: EP9804711
(87) Internationale Veröffentlichungsnummer: WO9906251

(56) Entgegenhaltungen:
- WO-A-96/39740
- WO-A-98/08717
- DE-A- 4 032 922
- DE-A- 4 428 543
- DE-A- 4 431 699

## Beschreibung

Die Erfindung betrifft eine Scheibenwischvorrichtung für eine Fahrzeugscheibe mit einem drehrichtungsumkehrbaren Wischermotor gemäß dem Oberbegriff des Anspruchs 1. Die Erfindung betrifft außerdem ein Verfahren zum Einstellen des Wischfeldes und/oder der Umkehrposition bei einer Wischvorrichtung gemäß dem Oberbegriff des Anspruchs 8.

Aus der DE 44 31 699 A1 ist eine Scheibenwischvorrichtung mit einem drehrichtungsumkehrbaren Wischermotor bekannt. Diese Vorrichtung verfügt über eine Einrichtung zur Erfassung der Zeit, die der Wischarm für einen halben Wischzyklus, d.h. von einer Endlage bzw. Parkstellung bis zu einer Umkehrposition benötigt. Ferner ist eine Zeitvorgabeanordnung vorgesehen, die eine maximal zulässige Zeit für einen halben Wischzyklus vorgibt. In einem Vergleicher wird die maximal zulässige Zeit mit der tatsächlich ermittelten Zeit verglichen und bei Zeitüberschreitung ein Wischvorgang in die entgegengesetzte Wischrichtung ausgelöst. Bei dieser Vorrichtung wird das erfaßte Wischfeld von der Zeitvorgabeanordnung und den entsprechend vorgegebenen Zeitwerten bestimmt.

Ein anderes Wischfeld, mit anderem Wischwinkel, läßt sich nur dadurch einstellen, daß in Versuchen die für das neue Wischfeld notwendige Zykluszeit ermittelt und dieser Zeitwert in der Zeitvorgabeanordnung abgespeichert wird. Eine einfache Abänderung des Wischfeldes oder eine nachträgliche Kompensation des im Betrieb innerhalb des Wischergestänges entstehenden Spiels, welches zu einem gegenüber dem Neuzustand veränderten Wischfeld mit veränderten Umkehrlagen führt, ist nicht möglich.

Aus der WO 96/39740 ist eine Schaltungsanordnung zur Steuerung eines Garagentorantriebs bekannt. Die Schaltungsanordnung verfügt über einen Schalter, mit dem ein Mikroprozessor in einen Lernmodus gesetzt werden kann, so daß die maximal zulässige Kraft für die Schließstellung vorgegeben werden kann. Es ist ferner möglich, die Endlagen des Garagentorantriebs zu bestimmen und zu verändern. Diese Vorrichtung ist für den Einsatz bei Kraftfahrzeugwischanlagen nicht geeignet.

Schließlich sind Scheibenwischvorrichtungen mit Getrieben bekannt, bei denen keine Drehrichtungsumkehr des Elektromotors vorgenommen wird. Bei diesen Vorrichtungen hängt das Wischfeld von der Getriebekinematik ab, so daß für eine Veränderung des Wischfeldes mechanische Änderungen an den Getrieberädern oder den zugeordneten Lenkern notwendig ist.

Die DE 40 32 922 A1 offenbart eine Scheibenwischvorrichtung und ein Verfahren zum Betreiben der Vorrichtung, wobei die Wischbereiche justiert werden können. Hierfür ist ein Lernprogramm vorgesehen. Die Wischer werden über Befehle des Bedieners positioniert und die gewünschten Umkehrlagen und Parklagen angefahren und die zugehörigen Positionssollwerte bestimmt und abgespeichert. Diese Vorrichtung und dieses Verfahren hat den Nachteil, daß die gewünschten Positionswerte gezielt angefahren werden müssen, was einen erheblichen Arbeitsaufwand darstellt und was unter Umständen zu nicht reproduzierbaren Ergebnissen führt.

Aufgabe der vorliegenden Erfindung ist es daher, eine Scheibenwischvorrichtung mit einem drehrichtungsumkehrbaren Motor bereitzustellen, bei der ein beliebiges Wischfeld einfach und kostengünstig eingestellt werden kann. Wesentlich ist dabei, daß es ermöglicht werden soll, einen einzigen Typus einer Scheibenwischvorrichtung an unterschiedliche Anwendungsfälle und für verschiedene Kraftfahrzeugtypen verwendbar zu machen. Mit anderen Worten soll mit einem Typ einer Scheibenwischvorrichtung jeder mögliche Anwendungsfall abgedeckt werden, ohne mechanische Veränderungen an der Vorrichtung selbst vornehmen zu müssen. Es soll ferner noch ermöglicht werden, das Wischfeld auch nach dem Einbau der Wischanlage in ein Kraftfahrzeug für Wartungszwecke einfach einstellbar zu gestalten.

Diese Aufgabe wird mit einer Scheibenwischvorrichtung gelöst, die die Merkmale des Patentanspruchs 1 aufweist. Diese Aufgabe wird außerdem mit einem Verfahren zum Einstellen des Wischfeldes und/oder der Umkehrposition bei einer Wischvorrichtung gelöst, das die Merkmale des Patentanspruchs 8 aufweist.

Die Scheibenwischvorrichtung besitzt einen Prozessor, welcher Betriebssignale empfängt und Steuerungssignale an den Motor abgibt. Der Prozessor weist einen Betriebsmodus und einen Lernmodus auf, wobei er mit einem Schaltsignal in den Lernmodus schaltbar ist, so daß eine Umkehrposition der Abtriebswelle und/oder eine Umkehrposition des Wischarmes in einer Speichereinheit abspeicherbar und in dem Betriebsmodus als Wischerumkehrposition beliebig oft abrufbar ist. Die Erfindung beruht also auf der Erkenntnis, daß die Umkehrpositionen quasi in einem Testbetrieb,dem Lernmodus, erlernt und in dem Betriebsmodus reproduziert werden können. Mechanische Änderungen zur Anpassung des Wischfeldes an unterschiedliche Gegebenheiten oder Zeitmessungen sind folglich nicht erforderlich. Ausführungsbeispiele der Erfindung gehen aus Unteransprüchen zusammen mit der Beschreibung und der Zeichnung hervor.

Die Erfindung wird nachstehend anhand der Zeichnung näher beschrieben. In der Zeichnung zeigt:
- Fig. 1: schematisches Blockschaltbild einer Scheibenwischvorrichtung nach der Erfindung;
- Fig. 2: schematische Signalflußdiagramm zur Verdeutlichung der Arbeitsweise der erfindungsgemäßen Scheibenwischvorrichtung.

Eine Scheibenwischvorrichtung 1 umfaßt einen in seiner Drehrichtung umkehrbaren Wischermotor 2 mit einer Abtriebswelle 3 und einem daran befestigten Wischarm 4. Ein Scheibenwischer reinigt ein definiertes Wischfeld 5 einer Kraftfahrzeugscheibe 6 von Verschmutzungen und Verunreinigungen. Das Wischfeld wird begrenzt von einer Parkstellung P und einer äußeren Umkehrposition U. Der Wischermotor 2 ist mit einer Einheit 7 zum Erfassen der Position der Abtriebswelle 3 und ergänzend oder alternativ zum Erfassen der Position des Wischarms 4 ausgerüstet. Diese Einheit 7 gibt Betriebssignale 8 an eine Elektronikeinheit 9 zur Steuerung des Motors 2.

Es lassen sich zwei Bauformen der Positionserfassungseinheit 7 unterscheiden. Bei einer relativen Positionssensierung ist ein magnetisches Geberelement auf der Abtriebswelle 3 und ein weiteres magnetisches Geberelement auf einem Getrieberad eines Untersetzungsgetriebes angeordnet. Jedem Geberelement ist ein Hall-Sensor zugeordnet und die Erfassung von Drehzahl und Drehwinkel erfolgt relativ zu der Parkposition, die das getrieberadseitige Geberelement vorgibt. Bei absolut analoger Positionssensierung ist nur ein abtriebswellenseitiges Geberelement für einen Sensor vorgesehen, der den Drehwinkel der Abtriebswelle 3 angibt. Aus dem Drehwinkel der Abtriebswelle und der Drehrichtung des Motors kann sodann die Position des Wischarmes errechnet werden.

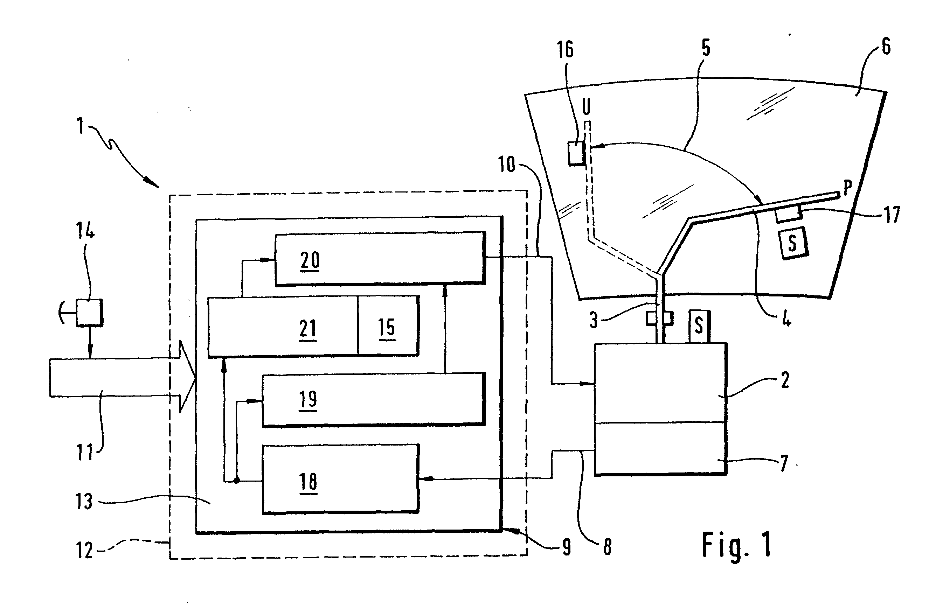

Die Wischermotorsteuerung geschieht wie folgt. Eine Elektronikeinheit 9 gibt Steuerungssignale 10 an den Wischermotor 2, wenn eine Betätigung eines Schaltglieds zum Ingangsetzen des Wischermotors 2 vorangegangen ist. In der Fig. 1 ist die von außen einwirkende Aktivierung schematisch mit Hilfe des Pfeils 11 angedeutet. Folglich treten über die Systemgrenze 12 in Richtung auf die Elektronikeinheit 9 die Aktivierungssignale 11 sowie die Betriebssignale 8. Andererseits sendet die Elektronikeinheit 9 Steuerungssignale 10 an den Wischermotor 2. Dabei erfolgt ein ständiger Abgleich zwischen den von der Positionserfassungseinheit 7 ermittelten Ist-Werten und den in der Elektronikeinheit 9 errechneten Soll-Werten nach einem bestimmten Regelalgorithmus. Entsprechend der Regelabweichung wird auf das Stellglied Wischermotor 2 Einfluß genommen. Es versteht sich, daß noch Zusatzfunktionen, wie beispielsweise Intervallschaltung, programmierbare Intervallschaltung, automatische Reversierung des Wischermotors 2 bei Totalblockierung oder ähnliche Sonderfunktionen ebenfalls implementiert sein können.

Wesentlich ist, daß die Elektronikeinheit 9 einen Prozessor 13 aufweist, welcher mit einem Schaltsignal von einem Betriebmodus in einen Lernmodus umschaltbar ist. Das Schaltsignal kann beispielsweise über einen externen, separaten Schalter 14 als Aktivierung 11 der Elektronikeinheit 9 zugeführt werden. Der Lernmodus ermöglicht folgendes: eine definierte, aktuelle Position der Abtriebswelle 3 oder des Wischarms 4 ist in einer Speichereinheit 15 abspeicherbar und nach der Umschaltung in den Betriebsmodus als Wischerumkehrposition beliebig oft abrufbar. Mit anderen Worten werden die Endlagen des Wischarms erst festgelegt, nachdem die Scheibenwischvorrichtung vollständig zusammengebaut und gegebenfalls an dem Kraftfahrzeug befestigt ist. Das Wischfeld wird insbesondere nicht durch eine abstrakte Zeitvorgabeanordnung bestimmt, sondern durch eine frei einstellbare Elektronikeinheit 9. Die Einstellung der gewünschten Wischerumkehrlage kann einfach und ohne besondere elektronische Sachkenntnis vorgenommen werden.

Weiterhin kann ein erstes und ein zweites Schaltsignal vorgesehen sein, wobei mit dem ersten Schaltsignal der Lernmodus der Elektronikeinheit 9 eingeschaltet und mit dem zweiten Schaltsignal von dem Lernmodus in den Betriebsmodus umgeschaltet werden kann.

Bei einer besonders vorteilhaften Ausführungsform wird die Scheibenwischvorrichtung während des Lernmodus quasi in eine Art Testbetrieb überführt, mit dem das Wischfeld ganz individuell an den vorliegenden Anwendungsfall angepaßt werden kann. Dies geschieht wie folgt. An der Kraftfahrzeugscheibe 6 werden in einem bestimmten Abstand zueinander Anschläge 16,17 befestigt, welche ein gewünschtes Wischfeld definieren. Der Anschlag 16 symbolisiert die gewünschte äußere Umkehrposition des Wischarms 4 ,und der Anschlag 17 die Parkstellung.

Es ist grundsätzlich möglich, nicht nur die Umkehrposition sondern auch die Parkstellung mit der beschriebenen Methode einzustellen. Es bietet sich allerdings an, eine bestimmte Stellung des Wischermotors 2 als festen Referenzpunkt zu verwenden. Weil dadurch die Parkposition bereits festgelegt ist, könnte der Anschlag 17 weggelassen werden und die Programmierung der Parkstellung wäre obsolet.

In einem nächsten Schritt wird die Elektronikeinheit 9 in den Lernmodus geschaltet, so daß der Wischermotor 2 in den Testbetrieb gerät und entsprechend der Drehrichtung des mitgeteilten Steuerungssignals 10 mit dem Wischarm 4 ausgehend von der Parkstellung in Richtung auf den äußeren Anschlag 16 verfährt. Die Positionswerte der Abtriebswelle 3 bzw. des Wischarms 4 werden dabei über die Einheit zur Erfassung der Position 7 permanent der Elektronikeinheit 9 mitgeteilt. Innerhalb einer bestimmten Zeit t erhält also die Elektronikeinheit 9 eine bestimmte Anzahl von Betriebssignalen 8. Sobald nun der Wischarm 4 gegen den Anschlag 16 trifft, bleiben die Betriebssignale 8 je Zeiteinheit vollständig aus bzw. vermindern sich stark. Die der Elektronikeinheit 9 zuletzt gemeldete Position des Wischarms 4 wird daher als Umkehrposition festgelegt und in einem Schreib-Lesespeicher (EEPROM)(15) abgespeichert.

Folglich wird der Wischermotor 2 reversiert, also in seiner Drehrichtung umgekehrt, und der Wischarm 4 verfährt gegen den anderen Anschlag 17. Auf dieser Seite wiederholt sich die zuvor beschriebene Routine, wenn die Parkstellung nicht durch den maschinenseitigen Referenzpunkt festgelegt ist. Nach dem Abschluß dieser Prozedur ist das Wischfeld der Scheibenwischvorrichtung vollständig eingestellt und die Elektronikeinheit 9 wird über ein zweites Schaltsignal in den Betriebsmodus umgeschaltet. In dem Betriebsmodus ist die Umkehrlage des Wischarms 4 beliebig oft abrufbar und reproduzierbar, ohne daß sie verlorengeht oder automatisch gelöscht würde.

Allerdings ist es möglich, die Scheibenwischvorrichtung erneut in den Lernmodus zu schalten, so daß ein neues Wischfeld programmierbar ist. Es besteht folglich die Gelegenheit, bei Scheibenwischvorrichtungen 1 mit höherem Betriebsalter erneut das Wischfeld festzulegen, so daß der Einfluß von mechanischem Spiel, welches im Laufe der Zeit in Gelenken und mechanischen Übertragungselementen entsteht, ausgeglichen werden kann.

Die Programmierung der Scheibenwischvorrichtung 1 läßt sich insbesondere auch einfach in den Herstellungsprozeß einbinden. Beispielsweise ist einem jeden Kraftfahrzeugtyp eine bestimmte Lehre zugeordnet, welche die Anschläge 16,17 aufweist und dadurch das gewünschte Wischfeld begrenzt. Für die Programmierung ist es lediglich notwendig, den Scheibenwischermotor 2 in einer Aufnahme anzuordnen, sodann die Lehre mit den Anschlägen 16,17 in Relation zu einer Drehachse der Abtriebswelle 3 anzuordnen und den Lernmodus zu starten. Dadurch wird es ermöglicht, jeden Wischermotor 2 mit einer Elektronikeinheit 9 zu versehen, welche die Wischfelddaten eines bestimmten Kraftfahrzeugs aufweist. Es sind also keinerlei Einstell- oder Programmierarbeiten an der Montagestraße des Kraftfahrzeugherstellers notwendig. Es besteht allerdings die Möglichkeit, dennoch über den Lernmodus noch in diesem Produktionsstadium oder in einem späten Betriebsstadium Einfluß auf die Wischerendlagen zu nehmen.

Zur näheren Erläuterung wird nochmals auf Figur 1 Bezug genommen. Der Figur ist entnehmbar, daß die von der Einheit 7 zur Positionserfassung zugeführten Betriebssignale 8 an einen Positionswertzähler 18 weitergegeben werden. Entsprechend den Betriebssignalen 8 sind zwei Alternativen denkbar. Zum einen ist es möglich, daß zu wenig oder keine Signale in einer bestimmten Zeiteinheit der Elektronikeinheit 9 zugeführt werden. Für diesen Fall sensiert die Blockiererkennung 19 den Blockierfall und gibt ein Signal an die Drehrichtungsumkehrung 20, welche ein Steuerungssignal 10 zur Drehrichtungsumkehr an den Wischermotor 2 abgibt.

Wenn der Blockierfall nicht vorliegt, wird in einem Vergleicher 21 permanent der aktuelle Positionswert des Wischarms 4 mit dem maximal möglichen Positionswert des Wischarms 4 verglichen. Für den Fall, daß die beiden Werte übereinstimmen, gibt der Vergleicher 21 ein entsprechendes Signal an die Drehrichtungsumkehrung 20 zum Reversieren des Wischermotors 2. Die einzelnen Baueinheiten der Elektronikeinheit 9 können sowohl als separate Prozessoren oder zusammen auf einem Prozessor angeordnet sein. Beispielsweise ist die Speichereinheit 15 ein Bestandteil des Vergleichers 21.

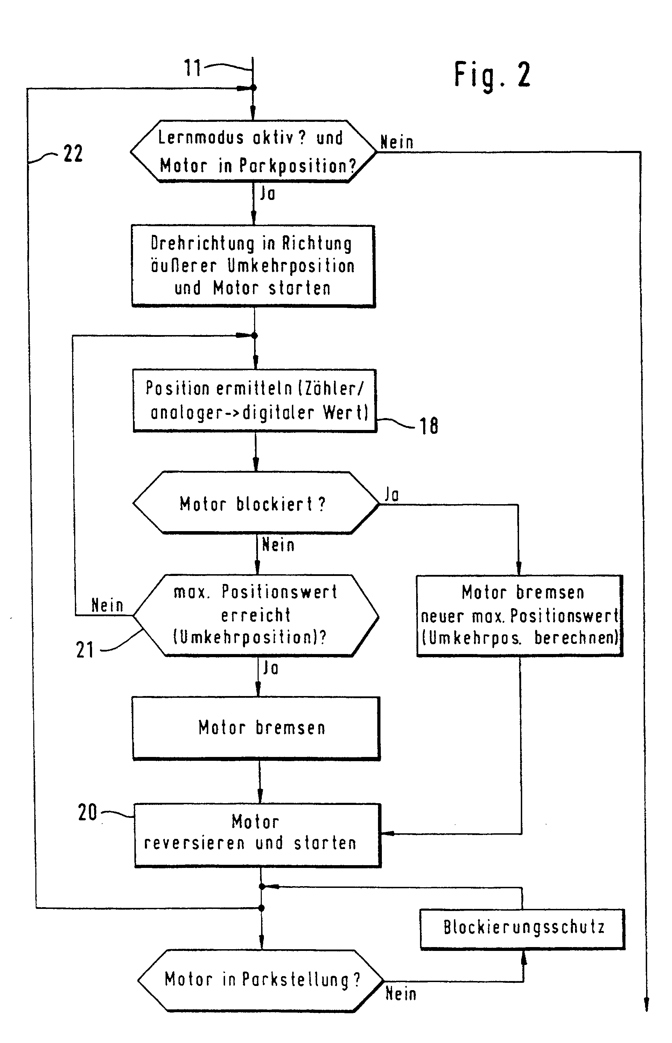

Nachstehend wird die Figur 2 detailliert beschrieben. Es wird von einem Zustand ausgegangen, in dem sich der Wischarm 4 in einer Parkposition P befindet. Die Parkposition ist ein maschinenfester Referenzpunkt, welcher von der Positionserfassungseinheit 7, beispielsweise durch einen gehäusefesten Hall-Sensor und einem magnetischen Geberelement auf der Abtriebswelle 3, eindeutig definiert ist. Wenn der Schalter 14 kein erstes Signal abgegeben hat, liegt Normalbetrieb mit entsprechenden Betriebssignalen 10 für den Wischermotor 2 vor. Durch die Betätigung des Schalters 14 wird nämlich entmaschinenfester Referenzpunkt, welcher von der Positionserfassungseinheit 7, beispielsweise durch einen gehäusefesten Hall-Sensor und einem magnetischen Geberelement auf der Abtriebswelle 3, eindeutig definiert ist. Wenn der Schalter 14 kein erstes Signal abgegeben hat, liegt Normalbetrieb mit entsprechenden Betriebssignalen 10 für den Wischermotor 2 vor. Durch die Betätigung des Schalters 14 wird nämlich entweder ein erstes oder ein zweites Schaltsignal an die Elektronikeinheit 9 abgegeben. Mit Hilfe des zweiten Schaltsignals wird die Elektronikeinheit 9 in den Betriebsmodus versetzt, so daß die Umkehrposition nicht mehr eingestellt werden kann. Wird allerdings ein erstes Schaltsignal als Aktivierung 11 der Elektronikeinheit 9 zugeführt, so startet der Wischermotor 2 und der Wischarm 4 bewegt sich in Richtung äußere Umkehrposition U . Die aktuellen Positionen des Wischarms 4 werden durch die Einheit 7 als Betriebssignale 8 permanent dem Positionswertzähler 18 zugeführt. Dieser überwacht den Eingang von Positionswertsignalen innerhalb bestimmter Zeitintervalle. Wenn innerhalb des gegebenen Zeitintervalls keine Positionswertsignale eingehen, ist der Motor blockiert und die Drehrichtungsumkehrung 20 gibt ein Steuersignal 10 zum Abbremsen und Reversieren des Wischermotors 2 ab. Sofern eine Blockierung nicht vorliegt, erfolgt in dem Vergleicher 21 eine Gegenüberstellung des aktuellen Positionswertes mit dem Wert der äußeren Umkehrposition. Sofern die beiden Werte nicht übereinstimmen, erfolgt eine Rückführung 22, so daß der Wischermotor 2 weiterhin in Richtung äußere Umkehrposition betrieben wird.

Stimmen aber die Positionswerte überein, so ist die äußere Umkehrposition erreicht und es erfolgt ein entsprechendes Steuersignal 10 zum Bremsen, Reversieren und Starten des Wischermotors 2.

Es versteht sich, daß die beschriebene Prozedur mehrfach hintereinander durchgeführt werden kann, wenn das erzielte Ergebnis die gestellten Anforderungen nicht erfüllt.

## Patentansprüche

1. Scheibenwischvorrichtung für eine Fahrzeugscheibe (6) mit einem drehrichtungsumkehrbaren Wischermotor (2) mit mindestens einer Einheit (7) zum Erfassen der Position einer Abtriebswelle (3) und/oder eines Wischarms (4) welche Betriebssignale (8) an eine Elektronikeinheit (9) mit einem Prozessor (13) abgibt, und Steuerungssignale (10) an den Wischermotor (2) abgibt und wenigstens einen Betriebsmodus und einen Lernmodus aufweist, wobei der Prozessor (13) mit einem Schaltsignal in den Lernmodus schaltbar ist und eine definierte, aktuelle Position der Abtriebswelle (3) und/oder des Wischarmes (4) im Lernmodus in einer Speichereinheit (15) abspeicherbar und in dem Betriebsmodus als Wischerumkehrposition beliebig oft abrufbar ist, **dadurch gekennzeichnet, daß** eine Lehre für das Wischfeld (5) vorgesehen ist, welche mindestens einen Anschlag (16, 17) im Bereich einer äußeren Umkehrposition des Wischarms (4) aufweist, daß eine Blockiererkennung (19) vorgesehen ist, welche das Anschlagen des Wischarms (4) am Anschlag (16, 17) erfasst, und die Blockiererkennung (19) mit der Elektronikeinheit (9) verknüpft ist, so daß zusammen mit einem motorseitigen Referenzpunkt ein Wischfeld (5) definiert ist.

2. Scheibenwischvorrichtung nach Anspruch 1, **dadurch gekennzeichnet, daß** dem Prozessor (13) ein erstes und ein zweites Schaltsignal zugeordnet ist, so daß mit dem ersten Schaltsignal der Lernmodus eingeschaltet und mit dem zweiten Schaltsignal der Betriebsmodus schaltbar ist.

3. Scheibenwischvorrichtung nach einem der vorhergehenden Ansprüche, **dadurch gekennzeichnet, daß** für die Erzeugung der Schaltsignale ein gesonderter Schalter (14) vorgesehen ist.

4. Scheibenwischvorrichtung nach einem der vorhergehenden Ansprüche, **dadurch gekennzeichnet, daß** die Elektronikeinheit (9) mindestens eine programmierbare Speichereinheit (15) zum änderbaren Abspeichern von Umkehrpositionen (U) aufweist.

5. Scheibenwischvorrichtung nach Anspruch 4, **dadurch gekennzeichnet, daß** die Speichereinheit (15) ein EEPROM ist.

6. Scheibenwischvorrichtung nach einem der vorhergehenden Ansprüche, **dadurch gekennzeichnet, daß** die Vorrichtung zumindest ein magnetisches Geberelement auf der Abtriebswelle (3) aufweist, der ein Hall-Sensor zugeordnet ist, so daß eine aktuelle Position absolut analog ermittelbar ist.

7. Scheibenwischvorrichtung nach einem der vorhergehenden Ansprüche, **dadurch gekennzeichnet, daß** ein magnetisches Geberelement auf der Abtriebswelle (3) und ein weiteres Geberelement auf einem Getrieberad angeordnet ist, und daß die aktuelle Position der Abtriebswelle (3) relativ zu der Parkstellung der Abtriebswelle (3) ermittelbar ist.

8. Verfahren zum Einstellen des Wischfeldes (5) und/oder der Umkehrposition (U) bei einer Wischvorrichtung nach einem der vorhergehenden Ansprüche, wobei in einem ersten Verfahrensschritt der Prozessor (13) in den Lernmodus geschaltet wird, danach zumindest eine Wischbewegung ausgeführt wird, **dadurch gekennzeichnet, daß** die Wischbewegung so lange ausgeführt wird, bis die Bewegung durch einen Anschlag (16, 17) begrenzt wird, und die Begrenzung als Umkehrposition (U) gespeichert wird, so daß nach dem Umschalten in den Betriebsmodus das gewünschte Wischfeld (5) mit der entsprechenden Umkehrposition (U) beliebig oft abrufbar ist.

9. Verfahren nach Anspruch 8, **dadurch gekennzeichnet, daß** das Wischfeld (5) mit der entsprechenden Umkehrposition (U) in der Speichereinheit (15) beliebig oft und überschreibbar speicherbar ist.

## Claims

1. A windshield wiper device for a vehicle windshield (6) comprising a wiper motor (2) having a reversible rotational direction, at least one unit (7) for detecting a position of a driven shaft (3) and/or a wiper arm (4), which transmits operating signals (8) to an electronic unit (9) having a processor (13) and for sending control signals (10) to the wiper motor (2), and having at least one operating mode and one learning mode, where the processor (13) can be switched into the learning mode with a switch signal, and a defined, current position of the driven shaft (3) and/or the wiper arm (4) can be stored in a memory unit (15) while in the learning mode, and can be called up repeatedly in the operating mode as a wiper reversal position, **characterized in** a template for the wiped area (5) having at least one stopper (16, 17) in an area of an outer reversal position of the wiper arm (4), and blocking recognition (19), which senses the blocking of the wiper arm (4) at the stopper (16, 17) and that the blocking recognition (19) is connected with the electronic unit (9) with the result that a wiped area (5) is defined together with a reference point of the motor.

2. The windshield wiper device of claim 1, **characterized in that** the processor (13) has a first and a second switch signal, so that with the first switch signal, the learning mode is switched on, and with the second switch signal, the operating mode is switched.

3. The windshield wiper device of one of the preceding claims, **characterized in that** a separate switch (14) is provided for generating the switch signal.

4. The windshield wiper device of one of the preceding claims, **characterized in that** the electronic unit (9) is provided with at least one programmable memory unit (15) in order to modifiably store reversal positions (U).

5. The windshield wiper device of claim 4, **characterized in that** the memory unit (15) is an EEPROM.

6. The windshield wiper device of one of the preceding claims, **characterized in that** the device having at least one magnetic transmitting component on the driven shaft (3), which is allocated to a Hall sensor, so that a current position can be determined in an absolute analog manner.

7. The windshield wiper device of one of the preceding claims, **characterized in that** a magnetic transmitting component arranged on the driven shaft (3) and another transmitting component arranged on a gear wheel are provided, such that a current position of the driven shaft (3) can be determined relative to a park position of the driven shaft (3).

8. A process for adjusting the wiped area (5) and/or the reversal position (U) for a wiper device of one of the preceding claims, wherein in a first step the processor (13) is switched into a learning mode, thereafter at least one wiper movement is performed, **characterized in that** the wiper movement is performed until the movement is limited by a stopper (16, 17), and the limiting position is stored as a reversal position (U), so that after switching over into the operating mode, the desired wiped area (5) with the corresponding reversal position (U) can be called up repeatedly.

9. The process according to claim 8, **characterized in that** the wiped area (5) with a corresponding reversal position (U) is storable in the memory (15) repeatedly and over-writable.

## Revendications

1. Dispositif d'essuie-glace pour un pare-brise (6) avec un moteur d'essuie-glace (2) réversible à deux sens avec au moins une unité (7) pour capter la position d'un arbre de sortie (3) et/ou d'un bras de monture d'essuie-glace (4), qui délivre des signaux de fonctionnement (8) à une unité électronique (9) équipée d'un processeur (13), et délivre des signaux de commande (10) au moteur d'essuie-glace (2) et présente au moins un mode de fonctionnement et un mode d'adaptation, dans lequel le processeur (13) peut être commuté par un signal de commutation en mode d'adaptation et une position courante définie de l'arbre de sortie (3) et/ou du bras de monture d'essuie-glace (4) peut être mémorisée en mode d'adaptation dans une unité de mémoire (15) et peut être appelée avec une fréquence quelconque en mode de fonctionnement comme position d'inversion de l'essuie-glace, **caractérisé en ce qu'**il est prévu un gabarit pour l'aire (5) balayée par l'essuie-glace qui présente au moins une butée (16, 17) dans la zone dune position d'inversion extérieure du bras de monture d'essuie-glace (4), **en ce qu'**il est prévu une identification de blocage (19), qui capte l'appui du bras de monture d'essuie-glace (4) sur la butée (16, 17) et l'identification de blocage (19) est combinée avec l'unité électronique (9) de telle sorte qu'une aire (5) balayée par l'essuie-glace soit définie conjointement avec un point de référence côté moteur.

2. Dispositif d'essuie-glace selon la revendication 1, **caractérisé en ce qu'**il est affecté au processeur (13) un premier et un deuxième signaux de commutation de telle sorte que le mode d'adaptation soit enclenché avec le premier signal de commutation et que le mode de fonctionnement puisse être enclenché par le deuxième signal de commutation.

3. Dispositif d'essuie-glace selon Tune quelconque des revendications précédentes, **caractérisé en ce qu'**il est prévu un commutateur séparé (14) pour la production des signaux de commutation.

4. Dispositif d'essuie-glace selon Tune quelconque des revendications précédentes, **caractérisé en ce que** l'unité électronique (9) présente au moins une unité de mémoire programmable (15) pour une mémorisation modifiable des positions d'inversion (U).

5. Dispositif d'essuie-glace selon la revendication 4, **caractérisé en ce que** l'unité de mémoire (15) est une mémoire EEPROM.

6. Dispositif d'essuie-glace selon Tune quelconque des revendications précédentes, **caractérisé en ce que** le dispositif présente au moins un élément transmetteur magnétique sur l'arbre de sortie (3), auquel est affecté un capteur de Hall, de telle sorte qu'une position courante puisse être déterminée de manière absolument analogique.

7. Dispositif d'essuie-glace selon Tune quelconque des revendications précédentes, **caractérisé en ce qu'**un élément transmetteur magnétique est agencé sur l'arbre de sortie (3) et un autre élément transmetteur sur une roue de transmission, et **en ce que** la position courante de l'arbre de sortie (3) peut être déterminée par rapport à la position de stationnement de l'arbre de sortie (3).

8. Procédé de réglage de l'aire balayée (5) et/ou de la position d'inversion (U) dans un dispositif d'essuie-glace selon Tune quelconque des revendications précédentes, dans lequel, dans une première étape du procédé, le processeur (13) est commuté en mode d'adaptation, après quoi on effectue au moins un déplacement de l'essuie-glace, **caractérisé en ce que** le déplacement de l'essuie-glace est réalisé assez longtemps pour que le déplacement de l'essuie-glace soit limité par une butée (16, 17) et la limitation est mémorisée comme position d'inversion (U) de telle sorte que, après commutation en mode de fonctionnement, l'aire souhaitée (5) balayée par l'essuie-glace avec la position d'inversion correspondante (U) puisse être appelée avec une fréquence quelconque.

9. Procédé selon la revendication 8, **caractérisé en ce que** l'aire (5) balayée par l'essuie-glace avec la position d'inversion correspondante (U) peut être mémorisée et écrasée dans l'unité de mémoire (15) avec une fréquence quelconque.
